# EUROPEAN PATENT APPLICATION

(11) **EP 1 849 607 A1**
(43) Date of publication of application: **31.10.2007**
(21) Application number: 07007181.6
(22) Date of filing: 05.04.2007
(51) Int. Cl.: B41J 2/145

(54) **Liquid jetting apparatus and liquid jetting method and display device manufacturing method using the same**

(30) Priority: 24.04.2006 KR 20060036774
(71) Applicant: Samsung Electronics Co., Ltd., Yeongtong-gu Suwon-city, Gyeonggi-do 442-742 (KR)
(72) Inventor: Kwon, Seoung Gyu, Suwon-si Gyeonggi-do (KR); Kim, Byoung Joo, Anyang-si Gyeonggi-do (KR); Kim, Jang Sub, Yeongtong-gu Suwon-si Gyeonggi-do (KR); Kang, Yoon Ho, Yongin-si Gyeonggi-do (KR); Shim, Yi Seop, Suwon-si, Gyeonggi-do (KR); Lee, Kwang Ho, Seoul (KR); Kwak, Chang Hun, Suwon-si, Gyeonggi-do (KR); Yu, Jae Jun, Gunpo-si, Gyeonggi-do (KR)
(74) Representative: Weitzel, Wolfgang

(57) **Abstract**

A liquid jetting apparatus capable of preventing an jetted organic liquid layer having a difference in its jetting amount from being recognized as a stain includes a plurality of jetting heads (102,104) to jet an organic liquid onto a substrate (110) having a plurality of pixels, and a convey unit to shift the different jetting heads to pixels representing the same color among the pixels arranged in a line in at least one of row and column directions.

## Description

### CROSS-REFERENCE TO RELATED APPLICATIONS

The present application claims priority to Korean Patent Application No. 2006-036774 filed on April 24, 2006, the disclosure of which is incorporated by reference in its entirety.

### BACKGROUND OF THE INVENTION

### 1. Technical Field

The present disclosure relates to a liquid jetting apparatus, a liquid jetting method and a display device manufacturing method. More particularly, the present disclosure relates to a liquid jetting apparatus, a liquid jetting method and a display device manufacturing method, capable of preventing a jetted organic layer having a difference in its jetting amount from being recognized as a stain.

### 2. Discussion of the Related Art

Various flat panel display devices have gained popularity due to features such as being light weight and thin, when compared to other display devices such as the cathode ray tube (CRT) device. The flat panel display devices include a liquid crystal display (LCD), a plasma display panel, a field emission display, and an electro-luminescent display.

The flat panel display devices are formed by a plurality of mask processes. One mask process includes a plurality of processes, such as a thin film deposition (or coating) process, a cleaning process, a photolithography process, an etching process, a photoresist stripping process, an inspection process, etc.

However, since a manufacturing process using the mask process includes many steps, manufacturing costs increase. Therefore, a study on a liquid jetting apparatus to form an organic layer by a liquid jetting method has actively been developed.

The liquid jetting apparatus includes at least one jetting head including a plurality of jetting nozzles to jet an organic liquid onto a substrate. One jetting head or a plurality of jetting heads per pixel is arranged to jet the organic liquid to each pixel.

If a defect occurs at a specific jetting nozzle of a jetting head arranged one by one per pixel, the organic liquid jetted through the defective jetting nozzle and the organic liquid jetted through the normal jetting nozzle differ in their jetting amounts. The defective jetting nozzle jets the organic liquid to adjacent pixels arranged in a line in the row or column direction. Then the amount of light generated by pixels having the different jetting amount of the organic liquid differs from that of the other pixels. Further, since the pixels receiving the organic liquid jetted through the defective jetting nozzle are arranged in a line in the row or column direction, they are recognized as a picture quality defect such as a band stain.

Moreover, if a plurality of jetting heads is arranged per pixel, even if a defect occurs at a jetting nozzle of at least one of the plurality of jetting heads, it is difficult to detect the defective jetting nozzle.

### SUMMARY OF THE INVENTION

Exemplary embodiments of the present invention provide a liquid jetting apparatus, a liquid jetting method and a display device manufacturing method, capable of preventing a jetted organic layer having a difference in its jetting amount from being recognized as a stain.

In accordance with an exemplary embodiment of the present invention, there is provided a liquid jetting apparatus comprising a plurality of jetting heads to jet an organic liquid onto a substrate having a plurality of pixels, and a convey unit to arrange the different jetting heads selected among the plurality of jetting heads to pixels representing the same color among the pixels arranged in a line in at least one of row and column directions.

The convey unit alternately shifts the plurality of jetting heads to the pixels representing the same color.

The jetting heads jet the organic liquid in the direction of a long side of each pixel and are slanted at a predetermined angle with respect to the direction of the long side of each pixel.

Each of the plurality of the jetting heads jets the organic liquid by using one jetting nozzle per pixel.

Each of the plurality of jetting heads is shifted by a pixel pitch or more or by the number of the jetting heads after jetting the organic liquid to the first pixel and then jets the organic liquid to the next pixel.

In accordance with an exemplary embodiment of the present invention, there is provided a liquid jetting method comprising providing a plurality of jetting heads to jet an organic liquid onto a substrate having a plurality of pixels, and jetting the organic liquid by using the different jetting heads selected among the plurality of the jetting heads to pixels representing the same color among the pixels arranged in a line in at least one of row and column directions.

Providing the plurality of jetting heads includes the jetting heads alternately shifting to the pixels representing the same color.

Providing the plurality of jetting heads includes slanting the jetting heads at a predetermined angle with respect to the direction of a long side of each pixel which is the jetting direction of the organic liquid.

Each of the plurality of jetting head jets the organic liquid by using one jetting nozzle per pixel.

Jetting the organic liquid comprises jetting the organic liquid to the first pixel corresponding to each of the plurality of jetting heads by using each of the plurality of jetting heads, shifting the jetting head by a pixel pitch or more or by the number of jetting heads, and forming an organic layer on pixels arranged in a line in row and column directions by repeating jetting the organic liquid and shifting the jetting head.

In accordance with an exemplary embodiment of the present invention, there is provided a display device manufacturing method comprising providing a substrate having a plurality of pixel regions, and forming an organic layer by using different jetting heads on adjacent pixel regions representing the same color among the pixel regions arranged in a line in at least one of row and column directions.

Forming the organic layer comprises jetting the organic liquid onto the substrate by using jetting heads located in the pixel regions and at boundaries of the pixel regions.

The organic layer may be a color filter of an LCD device or a light emitting layer of an organic EL display device.

### BRIEF DESCRIPTION OF THE DRAWINGS

Exemplary embodiments of the present invention can be understood in more detail from the following descriptions taken in conjunction with the accompanying drawings, in which:
FIG. 1 illustrates a liquid jetting apparatus including two jetting heads according to an exemplary embodiment of the present invention;
FIG. 2 illustrates the arrangement relationship of jetting nozzles of each of the two jetting heads in FIG. 1;
FIG. 3 illustrates a liquid jetting apparatus including three jetting heads according to an exemplary embodiment of the present invention;
FIG. 4 illustrates the arrangement relationship of jetting nozzles of each of the three jetting heads in FIG. 3;
FIG. 5 illustrates a liquid jetting apparatus including four jetting heads according to an exemplary embodiment of the present invention;
FIG. 6 illustrates the arrangement relationship of jetting nozzles of each of the four jetting heads in FIG. 5;
FIGs. 7A to 7C illustrate a manufacturing method of an organic layer formed by using the liquid jetting apparatus according to an exemplary embodiment of the present invention;
FIG. 8 illustrates pixels each having a long side in the row direction, to which the liquid jetting apparatus according to an exemplary embodiment of the present invention is applied;
FIGs. 9A to 9C illustrate the arrangement relationship of jetting nozzles of jetting heads of a liquid jetting apparatus according to an exemplary embodiment of the present invention;
FIGs. 10A and 10B illustrate a manufacturing method of an organic layer formed by using a liquid jetting apparatus according to an exemplary embodiment of the present invention;
FIG. 11 1 illustrates an LCD device having a plurality of thin films formed by the liquid jetting apparatus according to an exemplary embodiment of the present invention; and
FIG. 12 illustrates an organic EL display device having a plurality of thin films formed by the liquid jetting apparatus according to an exemplary embodiment of the present invention.

### DETAILED DESCRIPTION OF THE EXEMPLARY EMBODIMENTS

Exemplary embodiments of the invention are described more fully hereinafter with reference to the accompanying drawings, in which embodiments of the invention are shown. This invention may, however, be embodied in many different forms and should not be construed as limited to the embodiments set forth herein.

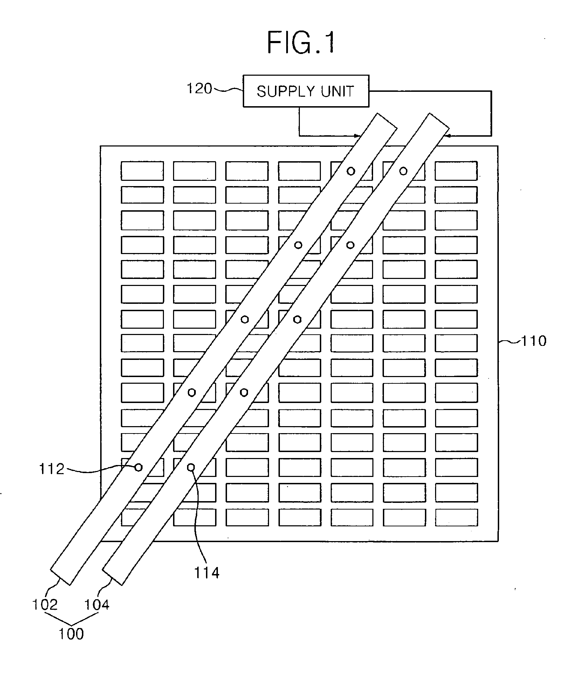

FIG. 1 illustrates a liquid jetting apparatus to form a color layer according to an exemplary embodiment of the present invention.

Referring to FIG. 1, the liquid jetting apparatus includes a jetting unit 100 to jet an organic liquid onto a substrate 110, a supply unit 120 to supply the organic liquid to the jetting unit 100, and a convey unit (not shown) to convey the jetting unit 100 across the substrate 110.

The supply unit 120 supplies the organic liquid to jetting nozzles 112 of a first jetting head 102 and to jetting nozzles 114 of a second jetting head 104.

The convey unit conveys the first and second jetting heads 102 and 104 in a predetermined direction. Specifically, the convey unit arranges the different jetting heads 102 and 104 with adjacent pixels representing the same color among pixels. The adjacent pixels are positioned in a line that has any one of row and column directions. To this end, the convey unit uses various convey tools, such as an XY table, to convey the first and second jetting heads 102 and 104.

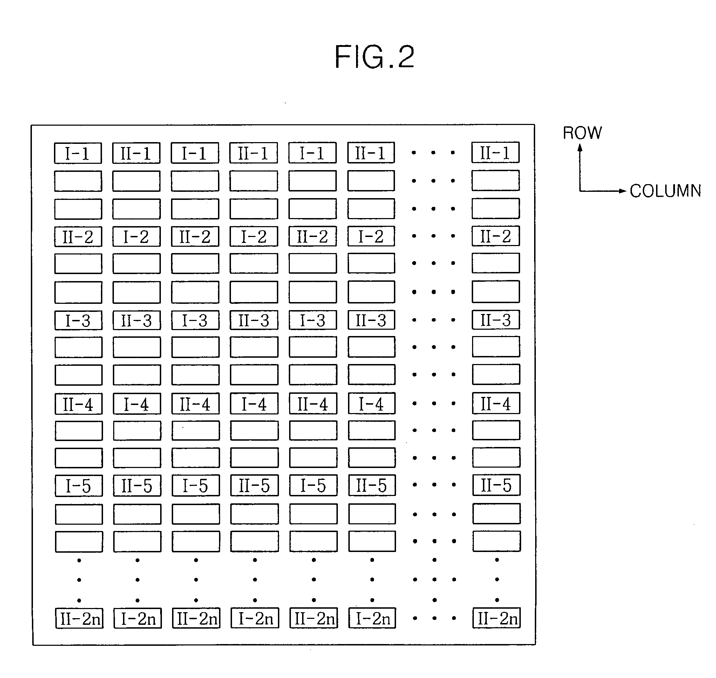

The jetting unit 100 includes the first and second jetting heads 102 and 104 having a plurality of jetting nozzles 112 and 114, respectively. The first and second jetting heads 102 and 104 jet the organic liquid in the long side direction of each pixel and are arranged to slant at a predetermined angle with respect to the direction of the long side of each pixel. In this case, the first and second jetting heads 102 and 104 are arranged in a plane parallel to the substrate 110. The jetting nozzles 112 and 114 of the first and second jetting heads 102 and 104 are alternately positioned in a pixel column and a pixel row representing the same color. Referring to FIG 2, wherein a pixel column is represented by a first arrow as extending from left to right and a pixel row is represented by a second arrow as extending from top to bottom, in the first, third,..., (2n-1)^{th} pixel columns representing the same color, jetting nozzles I-1, I-3,..., I-(2n-1) of the first jetting head 102 jet the organic liquid to the first, third,..., , (2n-1)^{th} pixels. Also in the first, third, ... (2n-1)^{th} pixel columns representing the same color, jetting nozzles II-1, II-3,..., II-(2n-1) of the second jetting head 104 jet the organic liquid to the second, fourth,..., 2n^{th} pixels. In the second, fourth,..., 2n^{th} pixel columns representing the same color, jetting nozzles I-2, I-4,..., I-2n of the first jetting head 102 jet the organic liquid to the second, fourth,...2n^{th} pixels and jetting nozzles II-2, II-4,..., II-2n of the second jetting head 104 jet the organic liquid to the first, third,..., , (2n-1)^{th} pixels.

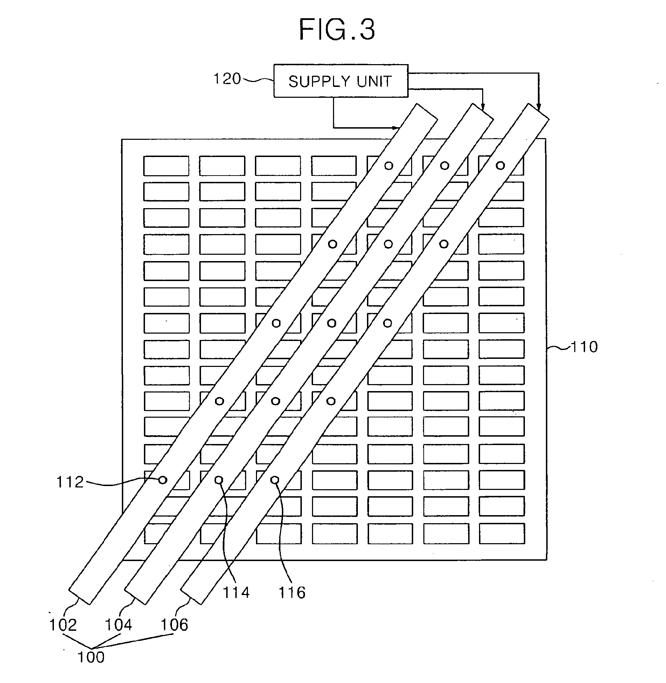

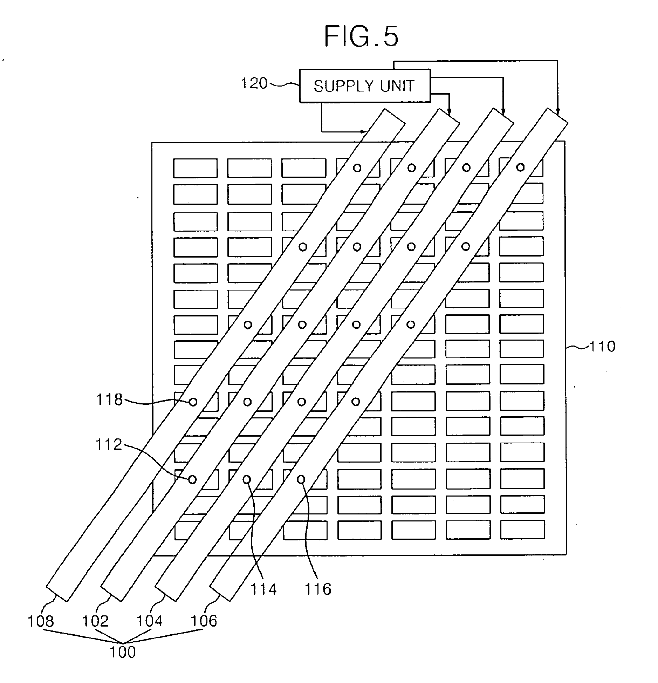

While an embodiment of the present invention has been described with reference to the liquid jetting apparatus having two jetting heads, it is applicable to the liquid jetting apparatuses having three or more jetting heads as illustrated in FIGs. 3 and 5.

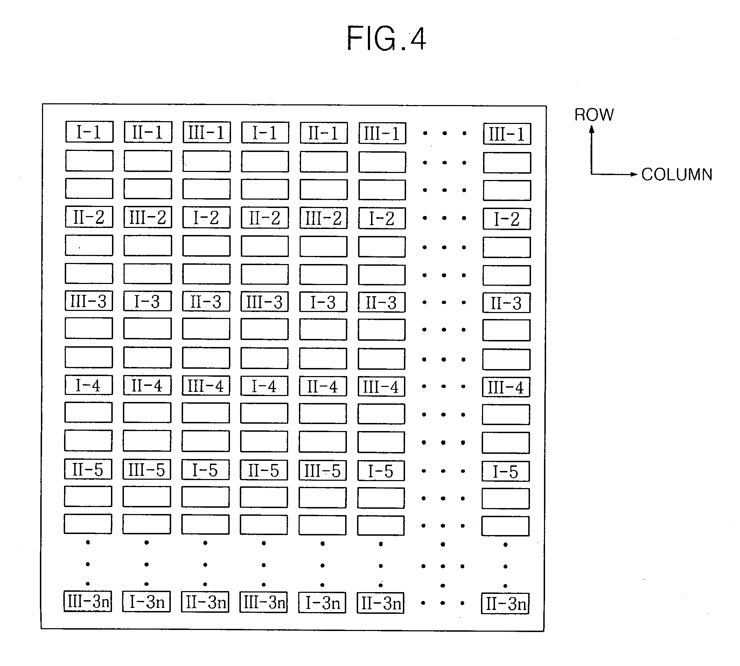

Referring to FIG. 3, first to third jetting nozzles 112, 114 and 116 of first to third jetting heads 102, 104 and 106 are alternately positioned in a pixel column and a pixel row representing the same color. In more detail, referring to FIG. 4, wherein, like FIG 2, pixel columns are represented as extending horizontally and rows as extending vertically, in the first, fourth,..., (3n-2)^{th} pixel columns representing the same color, jetting nozzles I-1, I-4,..., I-(3n-2) of the first jetting head 102 jet the organic liquid to the first, fourth,..., (3m-2)^{th} pixels; jetting nozzles II-1, II-4,...,II-(3n-2) of the second jetting head 104 jet the organic liquid to the second, fifth,...,(3m-I)^{th} pixels; and jetting nozzles III-1, III-4,..., III-(3n-2) of the third jetting head 106 jet the organic liquid to the third, sixth,..., 3m^{th} pixels. In the second, fifth,..., (3n-1)^{th} pixel columns representing the same color, jetting nozzles I-2, I-5,..., I-(3n-1) of the first jetting head 102 jet the organic liquid to the third, sixth,..., 3m^{th} pixels; jetting nozzles II-2, II-5,..., II-(3n-1) of the second jetting head 104 jet the organic liquid to the first, fourth,..., (3m-2)^{th} pixels; and jetting nozzles III-2, III-5,..., III-(3n-1)^{th} of the third jetting head 106 jet the organic liquid to the second, fifth,..., (3m-1)^{th} pixels. In the third, sixth,..., 3n^{th} pixel columns representing the same color, jetting nozzles I-3, I-6,..., I-3n of the first jetting head 102 jet the organic liquid to the second, fifth,..., (3m-1)^{th} pixels; jetting nozzles II-3, II-6,..., II-3n of the second jetting head 104 jet the organic liquid to the third, sixth,..., 3m^{th} pixels; and jetting nozzles III-3, III-6,..., III-3n of the third jetting head 106 jet the organic liquid to the first, fourth,..., (3m-2)^{th} pixels.

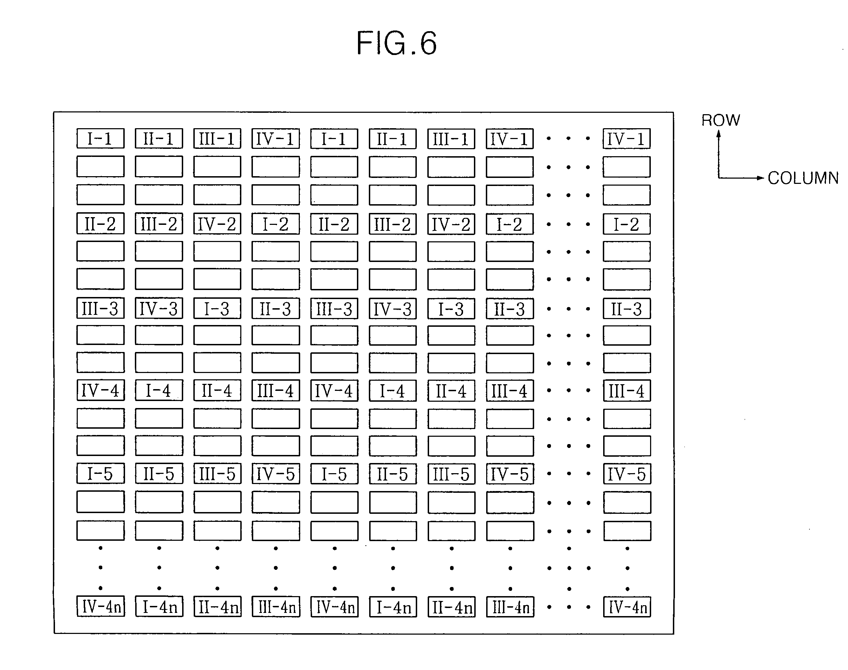

Referring to FIG. 5, first to fourth jetting nozzles 112, 114, 116 and 118 of first to fourth jetting heads 102, 104, 106 and 108 are alternately positioned in a pixel column and a pixel row representing the same color. As illustrated in FIG. 6, wherein, like Figs. 2 and 4, columns are shown as running horizontally and rows as running vertically, in the first, fifth,..., (4n-3)^{th} pixel columns representing the same color, jetting nozzles I-1, I-5,..., I-(4n-3) of the first jetting head 102 jet the organic liquid to the first, fifth,..., (4m-3)^{th} pixels; jetting nozzles II-1, II-5,..., II-(4n-3) of the second jetting head 104 jet the organic liquid to the second, sixth,..., (4m-2)^{th} pixels; jetting nozzles III-1, III-5,..., III-(4n-3) of the third jetting head 106 jet the organic liquid to the third, seventh,..., (4m-1)^{th} pixels; and jetting nozzles IV-1, IV-5,..., IV-(4n-3) of the fourth jetting head 108 jet the organic liquid to the fourth, eighth,..., 4m^{th} pixels. In the second, sixth,...,(4n-2)^{th} pixel columns representing the same color, jetting nozzles I-2, I-6,..., I-(4n-2) of the first jetting head 102 jet the organic liquid to the fourth, eighth,..., 4m^{th} pixels; jetting nozzles II-2, II-6,..., II-(4n-2) of the second jetting head 104 jet the organic liquid to the first, fifth,..., (4m-3)^{th} pixels; jetting nozzles III-2, III-6,..., III-(4n-2) of the third jetting head 106 jet the organic liquid to the second, sixth,..., (4m-2)^{th} pixels; and jetting nozzles IV-2, IV-6,..., IV-(4n-2) of the fourth jetting head 108 jet the organic liquid to the third, seventh,..., (4m-1)^{th} pixels. In the third, seventh,..., (4n-1)^{th} pixel columns representing the same color, jetting nozzles I-3, I-7,..., I-(4n-1) of the first jetting head 102 jet the organic liquid to the third, seventh,..., (4m-1)^{th} pixels; jetting nozzles II-3, II-7,..., II-(4n-1) of the second jetting head 104 jet the organic liquid to the fourth, eight,..., 4m ^{th} pixels; jetting nozzles III-3, III-7,..., III-(4n-1) of the third jetting head 106 jet the organic liquid to the first, fifth,..., (4m-3)^{th} pixels; and jetting nozzles IV-3, IV-7,..., IV (4n-1) of the fourth jetting head 108 jet the organic liquid to the second, sixth,..., (4m-2)^{th} pixels. In the fourth, eight,..., 4n^{th} pixel columns representing the same color, jetting nozzles 1-4, I-8,...,I-4n of the first jetting head 102 jet the organic liquid to the second, sixth,..., (4m-2)^{th} pixels; jetting nozzles II-4, II-8,..., II-4n of the second jetting head 104 jet the organic liquid to the third, seventh,..., (4m-1)^{th} pixels; jetting nozzles III-4, III-8,..., III-4n of the third jetting head 106 jet the organic liquid to the fourth, eighth,..., 4m^{th} pixels; and jetting nozzles IV-4, IV-8,..., IV-4n of the fourth jetting head 108 jet the organic liquid to the first, fifth,..., (4m-3)^{th} pixels.

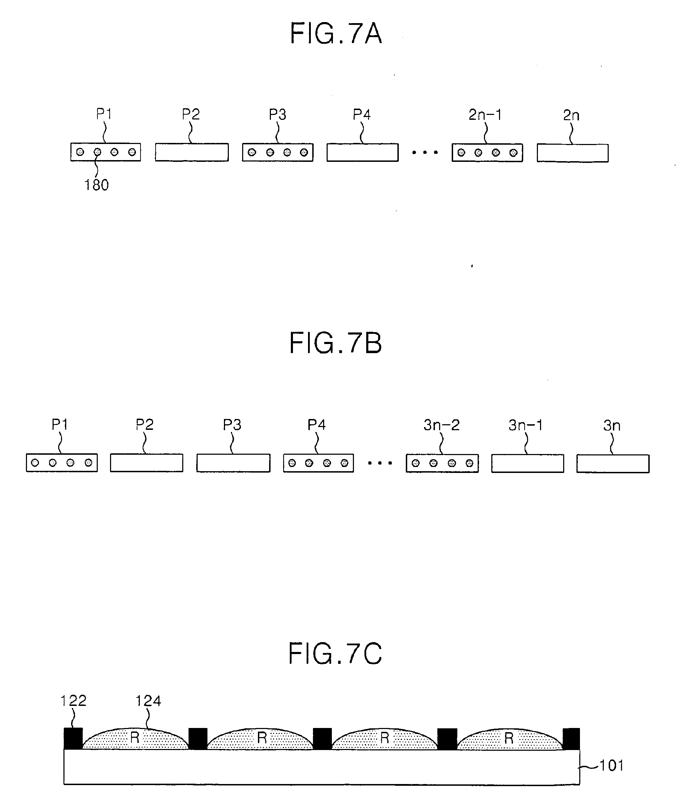

A system controller controls a plurality of jetting heads and jetting nozzles in consideration of a pixel pitch and the number of jetting heads. Specifically, the system controller controls the jetting heads so that the jetting heads can be shifted by the pixel pitch or by the number of the jetting heads after jetting the organic liquid to the first corresponding pixel. After shifting, the jetting heads they can jet the organic liquid to the next pixel. Assuming that the organic liquid is jetted through two jetting heads and a pixel pitch is 300 µm, jetting nozzles of the jetting heads jet the organic liquid by a width of 300 µm . Then, the jetting heads are shifted 300 µm, and after shifting, the jetting nozzles again jet the organic liquid by a width of 300 µm. Thereafter, the jetting nozzles repeat the above-described processes. If an organic liquid of four droplets is jetted to each pixel and an interval between the respective droplets is 50 µm, jetting nozzles 180 jet, as shown in FIG. 7A, the organic liquid of four droplets so as to be spaced apart at intervals of 50 µm within a first pixel Pl and are shifted by 450 µm. Thereafter, the jetting nozzles 180 jet the organic liquid within the third pixel P3, fifth pixel P5,..., (2n-1)^{th} pixel Pn-1 in the above-described manner.

Assuming that the organic liquid is jetted through three jetting heads and a pixel pitch is 300 µm, jetting nozzles of the jetting heads jet the organic liquid by a width of 300 µm and then don't jet the organic liquid by a width of 600 µm. In other words, the jetting heads are shifted by 600 µm. Thereafter, the jetting nozzles repeat the above processes. If an organic liquid of four droplets is jetted to each pixel and an interval between the respective droplets is 5.0 µm, jetting nozzles 180 jet, as shown in FIG 7B, the organic liquid of four droplets so as to be spaced apart at intervals of 50 µm within the first pixel P1 and are shifted by 750 µm. Thereafter, the jetting nozzles 180 jet the organic liquid within the fourth pixel P4, seventh pixel P7,..., (3n-2)^{th} pixel P3n-2 in the above-described manner.

If the organic liquid jetted onto the substrate is baked at a predetermined temperature, color layers 124 to represent colors in pixel regions divided by light blocking layers 122 are formed as shown in FIG. 7C.

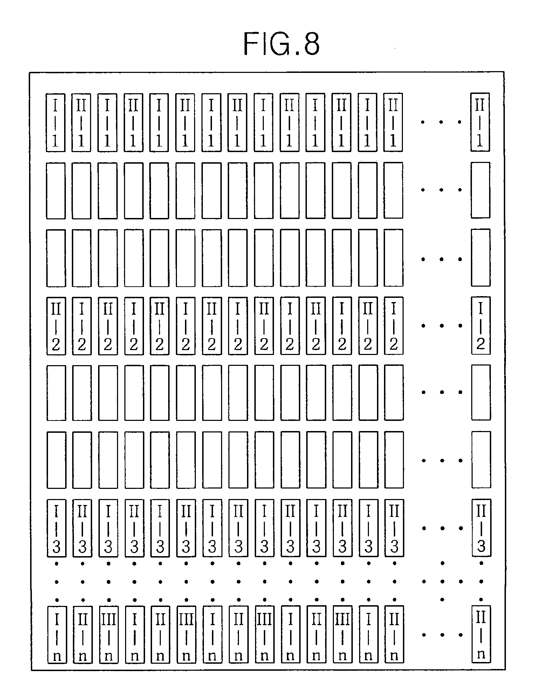

The liquid jetting apparatus according to an exemplary embodiment of the present invention is applied to not only pixels each having a long side in the pixel column direction but also pixels each having a long side in the pixel row direction as shown in FIG. 8. In this case, the liquid jetting apparatus jets the organic liquid to the pixels each having a long side in the pixel row direction by using at least two jetting heads.

As described above, the liquid jetting apparatus according to an exemplary embodiment of the present invention includes a plurality of jetting heads located alternately in a pixel column and a pixel row representing the same color. Organic liquids are jetted to pixels located in the upward, downward, right and left directions on the basis of one pixel and to the reference pixel by different jetting heads. Therefore, if the jetting amount of the liquid jetted by one of a plurality of jetting heads differs, since the organic liquid jetted through a nozzle of that jetting head is dispersed onto a substrate, it is not recognized as a band defect.

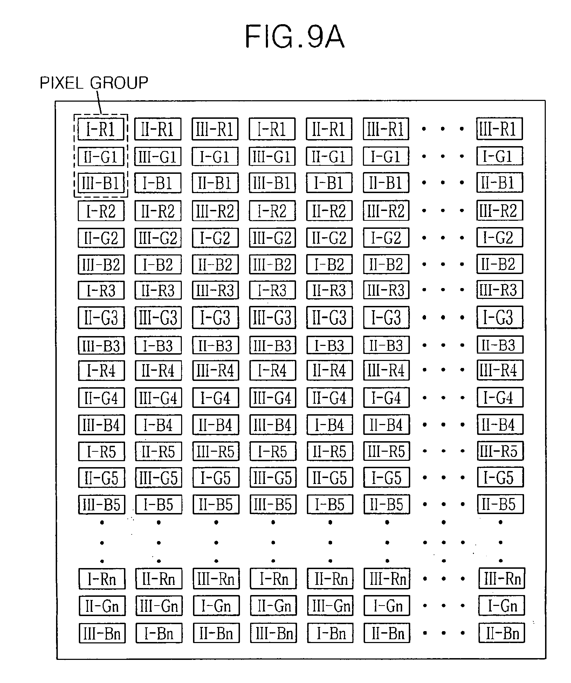

FIGs. 9A to 9C illustrate the arrangement relationship of jetting nozzles of jetting heads of a liquid jetting apparatus according to an exemplary embodiment of the present invention.

The liquid jetting apparatus includes a plurality of jetting heads located alternately in a pixel column and a pixel row representing the same color.

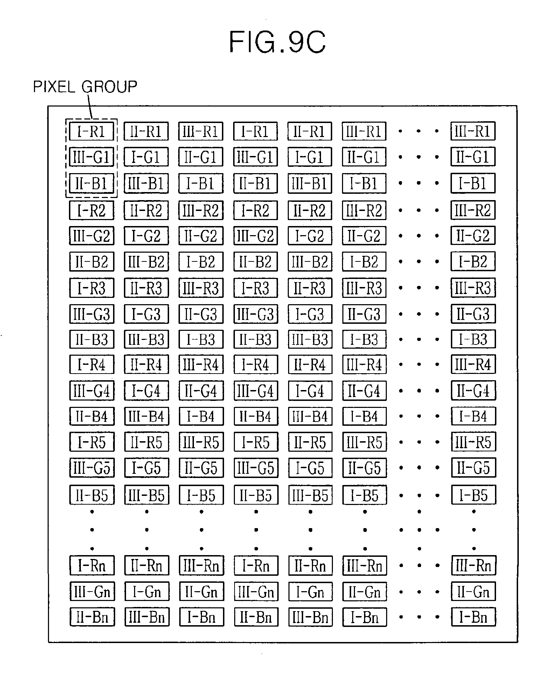

As shown in FIGs. 9A and 9C, jetting heads I-R, II-R, III-R, I-G, II-G, III-G, I-B, II-B and III-B to jet red (R), green (G) and blue (B) organic liquids per each pixel group including R, G and B pixels are different. A jetting head jetting an organic liquid to one pixel is different from jetting heads jetting organic liquids to pixels located in the upward, downward, right and left directions with respect to that pixel.

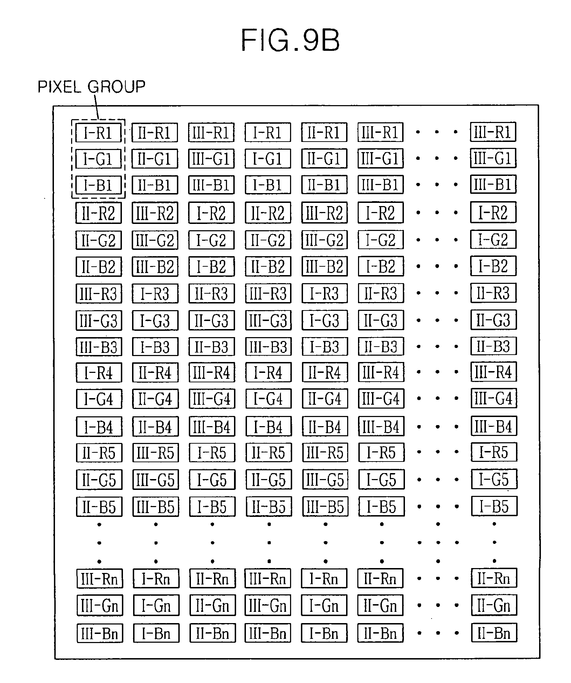

As shown in FIG. 9B, while jetting heads I-R, II-R, III-R, I-G, II-G, III-G, I-B, II-B and III-B to jet R, G and B organic liquids per each pixel group are the same, jetting heads used for adjacent pixel groups are different. A jetting head jetting organic liquids to one pixel group is different from jetting heads jetting organic liquids to pixel groups located in the upward, downward, right and left directions with respect to that pixel group.

As described above, the liquid jetting apparatus according to an exemplary embodiment of the present invention includes a plurality of jetting heads located alternately in a pixel column and a pixel row representing the same color. A jetting head jetting an organic liquid to one pixel (or one pixel group) is different from jetting heads jetting organic liquids to pixels (or pixel groups) located in the upward, downward, right and left directions on the basis of that reference pixel (or pixel group) and to the reference pixel. Therefore, if the jetting amount of any one jetting head (or jetting nozzle) among a plurality of jetting heads differs, the organic liquid jetted through that jetting head (or jetting nozzle) is dispersed onto a substrate and it is not recognized as a band defect.

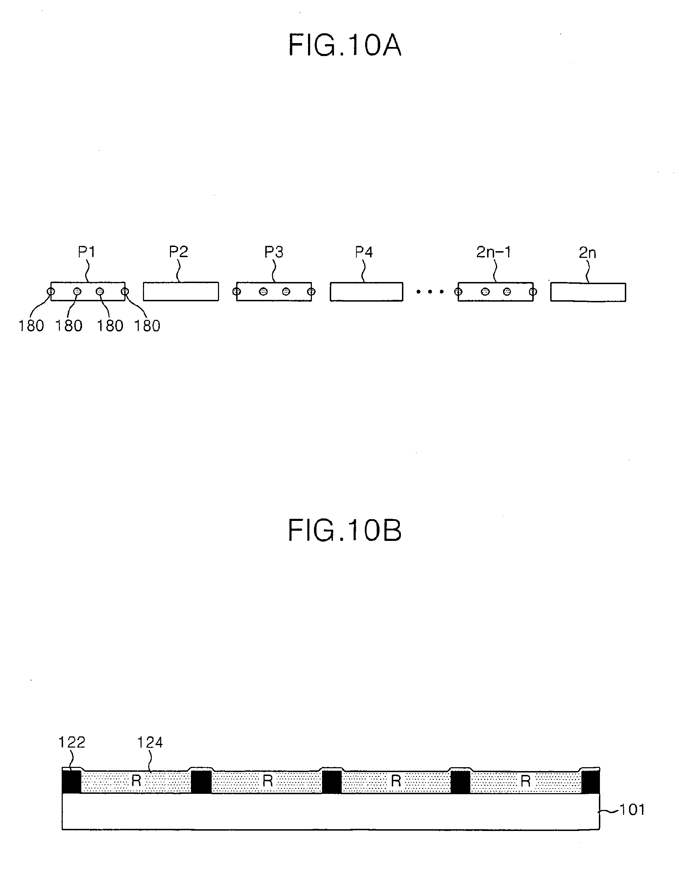

FIGs. 10A and 10B are diagrams for describing a liquid jetting method according to an exemplary embodiment of the present invention.

The liquid jetting apparatus according to the exemplary embodiment of the present invention described in connection with FIGs. 10A and 10B comprises the same elements as that shown in FIG. 1 at least except that jetting nozzles are also located at boundaries of each pixel region. Therefore, a detailed description of the same elements will be omitted.

As shown in FIG 10A, jetting nozzles 180 of each jetting head are located at boundaries of each pixel regions as well as in each pixel region. In other words, the jetting nozzles 180 are additionally located on light blocking layers 122 to divide the pixel region. If organic liquid is jetted onto a substrate 101 by using the jetting nozzles 180 and the organic liquid is soft-baked, color layers 124 are uniformly formed throughout the entire area of the pixel region as shown in FIG. 10B. While the color layers 124 shown in FIG. 7C are formed in a dorm shape in which the thickness of the edge of the pixel region is different from that of the center thereof, the color layers 124 shown in FIG. 10B have a uniform thickness throughout the entire area of the pixel region. In addition, while the light luminance irradiated to the edge of the pixel region in the color layers 124 shown in FIG. 7C is different from that irradiated to the center thereof, the light luminance irradiated to the color layers 124 shown in FIG 10B is the same throughout the whole area of the pixel region.

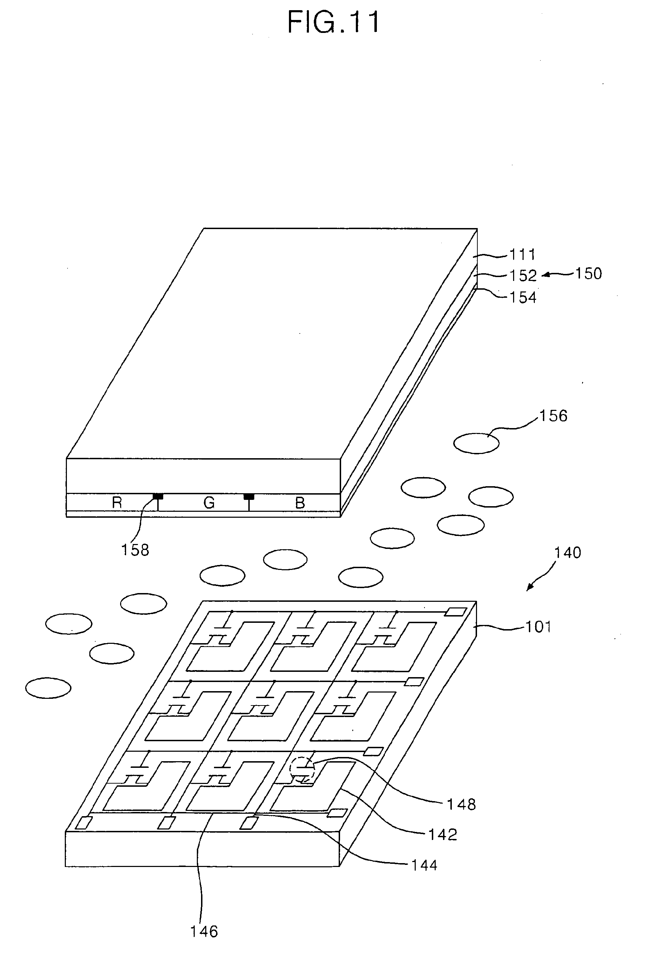

FIG. 11 illustrates an LCD panel including a color filter formed by the liquid jetting apparatus according to an exemplary embodiment of the present invention.

The LCD panel shown in FIG. 11 includes a color filter substrate 150, and a thin film transistor (TFT) substrate 140 bonded to the color filter substrate 150 with a liquid crystal layer 156 disposed therebetween.

The color filter substrate 150 may include a black matrix 158, a color filter 152 and a common electrode 154 that are sequentially formed on an upper substrate 111. The black matrix 158 is formed in a matrix on the upper substrate 111. The black matrix 158 divides the upper substrate 111 into a plurality of cell regions in which the color filter 152 is formed, and prevents the interference of light between adjacent cells and the reflection of an external light. The color filter 152 is separately formed in the cell regions divided by the black matrix 158 as R, G and B, respectively, transmitting R, G and B lights. Such a color filter 152 is formed by using a liquid jetting apparatus according to an exemplary embodiment of the present invention. The common electrode 154 is a transparent conductive layer coated on the surface of the color filter 152 and supplies a common voltage that becomes a reference voltage while the liquid crystal layer 156 is driven.

The TFT substrate 140 includes a TFT 148 and a pixel electrode 142 that are formed in each cell region defined by an intersection of a gate line 146 and a data line 144. The TFT 148 supplies a data signal from the data line 144 to the pixel electrode 142 in response to a gate signal from the gate line 146. The TFT 148 includes a gate electrode connected to the gate line 146, a source electrode connected to the data line 144, a drain electrode connected to the pixel electrode 142, and a semiconductor layer that forms a channel between the source and drain electrodes and includes an active layer and an ohmic contact layer that overlap the gate electrode with a gate insulating layer disposed therebetween.

The pixel electrode 142 formed of, for example, a transparent conductive layer supplies the data signals from the TFT 148 so that the liquid crystal layer 156 can be driven.

The liquid crystal layer 156 having dielectric anisotropy controls light transmittance by rotating according to an electric field formed by the data signal of the pixel electrode 142 and the common voltage of the common electrode 154, thereby causing gray levels to be represented. The LCD panel further includes a spacer to maintain a constant cell gap between the color filter substrate 150 and the TFT substrate 140.

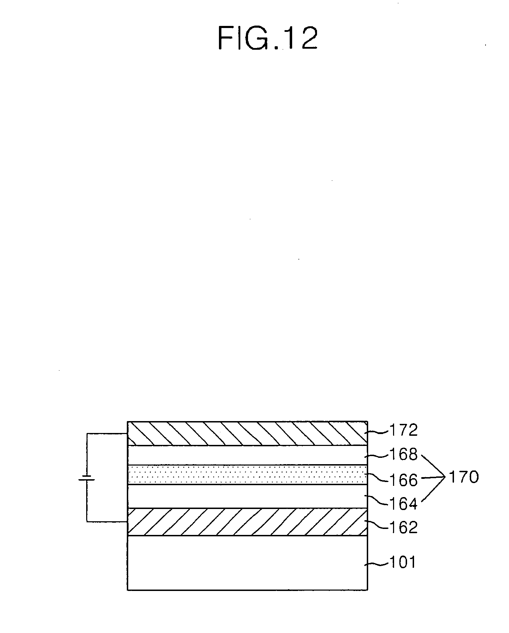

FIG. 12 is a cross-sectional view of an organic EL display device including a light emitting layer formed by a liquid jetting apparatus according to an exemplary embodiment of the present invention.

Referring to FIG. 12, the organic EL display device includes an anode electrode 162, a cathode electrode 172, and an organic thin film layer 170 formed between the anode electrode 162 and the cathode electrode 172.

The anode electrode 162 on a substrate 101 is formed of a material which has higher work function than the cathode electrode 172 and can transmit visible light generated from the organic thin film layer 170 to the exterior. For example, the anode electrode 162 is formed of indium-tin-oxide (ITO). A driving signal to inject holes is supplied to the anode electrode 162.

The organic thin film layer 170 includes a hole related layer 164, a light emitting layer 166 and an electron related layer 168 which are sequentially deposited on the anode electrode 162. The hole related layer 164 includes a hole injection layer and a hole transport layer, and the electron related layer 168 includes an electron transport layer and an electron injection layer. The light emitting layer 166 contained in the organic thin film layer 170 is formed by a liquid jetting apparatus according to an exemplary embodiment of the present invention. The light emitting layer 166 emits light by electric driving of the anode electrode 162 and cathode electrode 172. The visible light generated from the organic thin film layer 170 is emitted toward the substrate 101 via the anode electrode 162.

A driving signal to inject electrons is supplied to the cathode electrode 172. The cathode electrode 172 is formed of a metal having high reflectivity, for example, of gold (Au), aluminum (Al), cupper (Cu), silver (Ag), or an alloy thereof.

If the driving signals are applied to the anode electrode 162 and the cathode electrode 172, the anode and cathode electrodes 162 and 172 emit electrons and holes, and the electrons and holes emitted from the anode and cathode electrodes 162 and 172 are recombined within the organic thin film layer 170, thereby generating the visible light. The generated visible light is irradiated to the exterior through the anode electrode 162 and the substrate 101 and thus images are displayed.

While a liquid jetting apparatus according to an exemplary embodiment of the present invention has been described with reference to the first jetting head corresponding to the first pixel of a pixel column, it is not limited thereto.

Furthermore, while the organic liquid formed by a liquid jetting apparatus according to an exemplary embodiment of the present invention has been described with reference to the color filter of the LCD device and the light emitting layer of the organic EL display device, it is possible that the organic liquid is applied to a thin film formed of an organic material, such as a black matrix of the LCD device and an organic thin film layer contained in the organic EL display device.

As described above, the liquid jetting apparatus and method according to at least one embodiment of the present invention jets an organic liquid by using a plurality of different jetting heads to adjacent pixels representing the same color among pixels arranged in a line in at least any one of the row and column directions. Therefore, even if a defect occurs from any one of a plurality of jetting heads (or jetting nozzles), since an organic liquid jet through the jetting head (or jetting nozzle) is dispersed, it is not recognized as a picture quality defect such as a stain.

Moreover, since one jetting nozzle of one jetting head is arranged per pixel, jetting nozzle defect can be found by determining the thickness of an organic liquid jet in each pixel.

Although the illustrative embodiments of the present invention have been described herein with reference to the accompanying drawings, it is to be understood that the present invention should not be limited to those precise embodiments, and that various other changes and modifications may be affected therein by one of ordinary skill in the related art without departing from the scope or spirit of the invention. All such changes and modifications are intended to be included within the scope of the invention as defined by the appended claims.

## Claims

1. A liquid jetting apparatus, comprising:
a plurality of jetting heads to jet an organic liquid onto a substrate having a plurality of pixels,
wherein different jetting heads of the plurality of jetting heads are arranged to corresponded to pixels representing the same color among pixels located in a line in at least one of row and column directions.

2. The liquid jetting apparatus according to claim 1, wherein the plurality of jetting heads are alternately shifted to the pixels representing the same color.

3. The liquid jetting apparatus according to claim 1, wherein each of the plurality of jetting heads jets the organic liquid by using one jetting nozzle per pixel.

4. The liquid jetting apparatus according to claim 1, wherein the jetting heads jet the organic liquid in the direction of a long side of each pixel and are slanted at a predetermined angle with respect to the long side of each pixel.

5. The liquid jetting apparatus according to claim 1, wherein each of the plurality of jetting heads is shifted by a pixel pitch or more or by the number of the jetting heads after jetting the organic liquid to a first pixel.

6. The liquid jetting apparatus according to claim 5, wherein each of the plurality of jetting heads jets the organic liquid to a next pixel after being shifted.

7. A liquid jetting method, comprising:
providing a plurality of jetting heads to jet an organic liquid onto a substrate having a plurality of pixels; and
jetting the organic liquid by using different jetting heads selected among the plurality of jetting heads to pixels representing the same color among pixels arranged in a line in at least one of row and column directions.

8. The liquid jetting method according to claim 7, wherein providing the plurality of jetting heads includes alternately shifting the jetting heads to the pixels representing the same color.

9. The liquid jetting method according to claim 7, wherein providing the plurality of jetting heads includes slanting the jetting heads at a predetermined angle with respect to the direction of a long side of each pixel.

10. The liquid jetting method according to claim 9, wherein the jetting heads jet the organic liquid in the direction of the long side of each pixel.

11. The liquid jetting method according to claim 7, wherein each of the jetting heads jets the organic liquid by using one jetting nozzle per pixel.

12. The liquid jetting method according to claim 7, wherein jetting the organic liquid comprises:
respectively jetting the organic liquid to a plurality of first pixels corresponding to each of the plurality of jetting heads by using each of the plurality of jetting heads;
shifting each jetting head by a pixel pitch or more or by the number of jetting heads;
respectively jetting the organic liquid to a plurality of next pixels corresponding to each of the plurality of shifted jetting heads; and
forming an organic layer on pixels arranged in a line in at least one of row and column directions by repeating the steps of jetting the organic liquid to the first and next pixels and shifting each jetting head.

13. A display device manufacturing method comprising:
providing a substrate having a plurality of pixel regions; and
forming an organic layer by using different jetting heads on adjacent pixel regions representing the same color among pixel regions of the plurality of pixel regions arranged in a line in at least one of row and column directions.

14. The display device manufacturing method according to claim 13, wherein forming the organic layer comprises jetting an organic liquid onto the substrate by using jetting heads located in the plurality of pixel regions and at boundaries of the plurality of pixel regions.

15. The display device manufacturing method according to claim 13, wherein the organic layer is a color filter.

16. The display device manufacturing method according to claim 13, wherein the organic layer is a light emitting layer.
